# EUROPÄISCHE PATENTSCHRIFT

(11) **EP 1 476 803 B1**
(45) Veröffentlichungstag und Bekanntmachung des Hinweises auf die Patenterteilung: **09.04.2008**
(21) Anmeldenummer: 03704376.7
(22) Anmeldetag: 11.01.2003
(51) Int. Cl.: G06F 3/023

(54) **VERFAHREN ZUR TEXTEINGABE DURCH AUSWAHL VON BUCHSTABEN MITTELS EINES CURSORS UND EINRICHTUNG ZUR DURCHFÜHRUNG DES VERFAHRENS**
METHOD FOR INPUT OF TEXT BY SELECTION OF LETTERS USING A CURSOR AND DEVICE FOR CARRYING OUT SAID METHOD
PROCEDE PERMETTANT D'ENTRER UN TEXTE PAR SELECTION DE CARACTERES AU MOYEN D'UN CURSEUR ET DISPOSITIF PERMETTANT D'EXECUTER CE PROCEDE

(30) Priorität: 14.01.2002 DE 10201195
(43) Veröffentlichungstag der Anmeldung: 17.11.2004
(73) Patentinhaber: Völckers, Oliver, 14055 Berlin (DE)
(72) Erfinder: Völckers, Oliver, 14055 Berlin (DE)
(74) Vertreter: Burghardt, Dieter
(86) Internationale Anmeldenummer: PCT/EP2003/000207
(87) Internationale Veröffentlichungsnummer: WO 2003/058420

(56) Entgegenhaltungen:
- EP-A- 1 061 714
- WO-A-99/30222
- US-A- 5 963 671
- WOMACK J E ET AL: "A TEXT ENTRY TECHNIQUE FOR SCROLLING KEYBOARDS" MOTOROLA TECHNICAL DEVELOPMENTS, MOTOROLA INC. SCHAUMBURG, ILLINOIS, US, Bd. 35, Juni 1998 (1998-06), Seiten 41-42, XP000862611 ISSN: 0887-5286

## Beschreibung

Die Erfindung betrifft ein Verfahren zur Texteingabe durch eine Auswahl von Buchstaben mittels eines Cursors am Bildschirm, das einsetzbar ist bei kompakten elektronischen Geräten, die aus Platzgründen nicht mit einer normalen Schreibmaschinen-Tastatur ausgestattet werden können und daher nur über eine behelfsmäßige Texteingabe durch Cursortasten oder ähnliche Eingabemedien verfügen und eine Einrichtung zur Umsetzung dieses Verfahrens.

Mobile elektronische Geräte mit Software-Steuerung und Display benötigen oft eine Texteingabe-Funktion, ohne jedoch über eine volle Schreibmaschinen-Tastatur zu verfügen. Für diese Anwendung wurden eine Reihe von Ersatz-Lösungen entwickelt, die eine Texteingabe mit Hilfe einer CursorAuswahl von Buchstaben unterstützen.

Die einfachste Lösung besteht aus einem auf dem Display angezeigten Buchstabenvorrat, über den ein Cursor mit Tasten oder einem Joystick in zwei oder vier Richtungen bewegt werden kann. Um den Cursor mehrere Positionen weiter zu bewegen, müssen die Tasten entsprechend oft ausgelöst werden. In einer Weiterentwicklung dieser Lösung können die Tasten bzw. der Joystick für eine bestimmte Wartezeit gehalten werden, worauf sich der Cursor automatisch in festgelegten Zeitabständen weiter bewegt (Autorepeat-Funktion).

Um größere Strecken mit dem Cursor schneller zurück legen zu können, kann die Geschwindigkeit der Cursorbewegung allmählich erhöht werden (Beschleunigung).

Mit berührempfindlichen Bildschirmen (Touchscreens), Digitalisiertabletts und Sensorstreifen läßt sich ein Cursor direkt an eine bestimmte Stelle setzen.

Eine automatische Worterkennung (engl. Predictive Text Input) kann aus einer reduzierten Information (neun Tasten anstelle von 26) eine vollständige Eingabe anhand eines eingebauten Wörterbuchs erraten. Diese Funktion ist bei Mobiltelefonen weit verbreitet.

Die Lösung mit zwei Cursortasten ist zwar einfach herzustellen und die Handhabung einfach zu erlernen, die Benutzung erfordert jedoch eine Vielzahl von Tasten-Betätigungen bzw. Wartezeiten für jede Eingabe, so daß sie nur als Notlösung akzeptiert wird.

Die Cursorsteuerung mit Autorepeat bzw. Beschleunigung erleichtert es zwar, längere Strecken mit dem Cursor zurückzulegen. Durch die schnelle Bewegung kann es jedoch leicht passieren, daß der Cursor über das Ziel hinausschießt und die Zielposition umständlich korrigiert werden muß. Ein Abbremsen der Bewegung ist nämlich nicht möglich.

Touchscreens, Digitalisiertabletts und Sensorstreifen erlauben zwar die direkte Anwahl einer Cursor-Position, aber durch die Vielzahl der nebeneinander liegenden Eingabe-Alternativen sind Fehleingaben in der Art möglich, daß die unmittelbar neben dem Ziel befindliche Position versehentlich ausgelöst wird.

Die automatische Worterkennung beschleunigt den Eingabevorgang erheblich, wenn eine Zifferntastatur zur Texteingabe verwendet werden soll. Die möglichen Eingabefolgen sind jedoch auf die im Wörterbuch vorhandenen Einträge beschränkt. Um andere Zeichenfolgen eingeben zu können, muß die Worterkennung extra abgeschaltet werden.

Die Texteingabe-Funktionen mit Cursorsteuerung nach dem Stand der Technik verwenden einen Cursor von konstanter Größe sowie Ziele (den Buchstabenvorrat) mit einheitlicher Größe. Nur die automatische Worterkennung beschränkt die Eingabemöglichkeiten auf die Menge der auf Grund eines elektronischen Wörterbuchs vermuteten Zeichen.

Natürlichsprachliche Wörter enthalten einige Redundanz, d.h. nach jedem Buchstaben sind nicht beliebige, sondern nur definierte Nachfolger möglich, damit sinnvolle Wörter entstehen. Beispielsweise sind nach dem Wortanfang "Qua" in der deutschen und englischen Sprache Buchstaben wie "d", "n" oder "r" häufig, um ein Wort zu bilden, nicht jedoch ein "a" oder ein "q".

Die bekannten und existierenden Texteingabe-Cursorsteuerungen bietet eine Vielzahl von Buchstaben zur Auswahl an, obwohl diese gar nicht sinnvoll gewählt werden können. Andererseits beschränkt das Verfahren der automatischen Worterkennung Eingaben nur auf Buchstabenfolgen, die im Wörterbuch vorhanden sind, obwohl bei Personennamen oder Adressen möglicherweise abweichende Sequenzen benötigt werden.

Ein Verfahren zur Unterstützung der Text-Eingabe über die Cursorauswahl aus einer Buchstabenliste sollte mit den unterschiedlichen Hardware-Techniken zur Cursorsteuerung funktionieren und eine schnelle Eingabe ermöglichen, ohne die Texteingabe einzuschränken, wie es bei der Worterkennung der Fall ist.

Ziel der Erfindung ist es, das Verfahren zur Texteingabe über eine Auswahl von Buchstaben aus eine Buchstabenliste mittels eines Cursors benutzerfreundlich zu gestalten, damit der Benutzer ohne komplizierte Bedienfolgen auskommen, damit die Benutzung ohne eine besondere Einarbeitung für jedermann möglich ist.

Der Erfindung liegt die Aufgabe zugrunde, ein Verfahren zur Texteingabe über eine Cursorauswahl aus einer Buchstabenliste, das mit unterschiedlichen Bedienelementen zur Cursorsteuerung funktioniert, und eine Einrichtung zur Durchführung des Verfahrens zu entwickeln.

Die Aufgabe wird durch die im kennzeichnenden Teil genannten Merkmale der unabhängigen Patentansprüche gelöst.

Das erfindungsgemäß gestaltete Verfahren zur Texteingabe durch Auswahl von Buchstaben mittels eines Cursors aus einer Liste von Buchstaben beruht darauf, daß die zur Texteingabe genutzte Auswahl von Buchstaben aus einer zuvor erfindungsgemäß erstellten Auswahldatei erfolgt. In dieser ist nach der mathematischen Methode der Häufigkeitsstatistik eine Buchstabenabfolge gewichtet gespeichert. Mittels eines gesteuerten grafischen und/oder eines akustischen Cursors wird diese Datei zur Auswahl der Buchstaben genutzt. Diesem Verfahren liegt der erfinderische Lösungsgedanke zu Grunde, ein Verfahren zu entwickeln, mit dem die Erkenntnis, daß das Auftreten bestimmter Buchstaben-Kombinationen in Texten unregelmäßig verteilt ist, zur Texteingabe genutzt werden kann.

Erfindungsgemäß wird die Wahrscheinlichkeit des Auftretens bestimmter Buchstaben-Kombinationen mit Hilfe einer Tabelle berechnet, die statistische Häufigkeiten aus einem repräsentativen Beispieltext automatisch ermittelt und steht dann der Auswahl von Buchstaben gemäß dem erfindungsgemäß gestalteten Verfahren zur Verfügung. Je nach Wahrscheinlichkeit ihres Auftretens in einem bestimmten Kontext erscheint der Cursor auf den erwarteten Buchstaben größer als auf den nicht erwarteten. Die in üblichen Texten enthaltenen Buch-staben-Abfolgen können damit schneller und sicherer ausgewählt werden.

Alle weiteren Erfindungsmerkmale sind aus den rückbezogenen Verfahrensansprüchen und den Sachansprüchen entnehmbar.

Die Erfindung soll an einem Ausführungsbeispiel näher erläutert werden. In der zugehörigen Zeichnung zeigen:
- Fig. 1: Blockschaltbild der Komponenten der erfindungsgemäßen Einrichtung zur Durchführung des Verfahrens
- Fig. 2: Bildschirmdarstellung einer Buchstabenliste von einheitlicher Größe
- Fig. 3: Bildschirmdarstellungen einer Buchstabenliste von variabler Größe
- Fig. 4: Weiteres Beispiel einer Buchstabenliste von variabler Größe
- Fig. 5: Flußdiagramm für den Ablauf der Verfahrensschritte bei der Eingabe
- Fig. 6: Darstellung eines Vergleiches des einstellbaren Effektes
- Fig. 7: Ablauf der Verfahrensschritte zur Generierung einer Häufigkeits-Tabelle
- Fig. 8: Speicherbedarf verschiedener Häufigkeits-Tabellen
- Fig. 9: Häufigkeits-Tabelle von einem deutschem Beispieltext

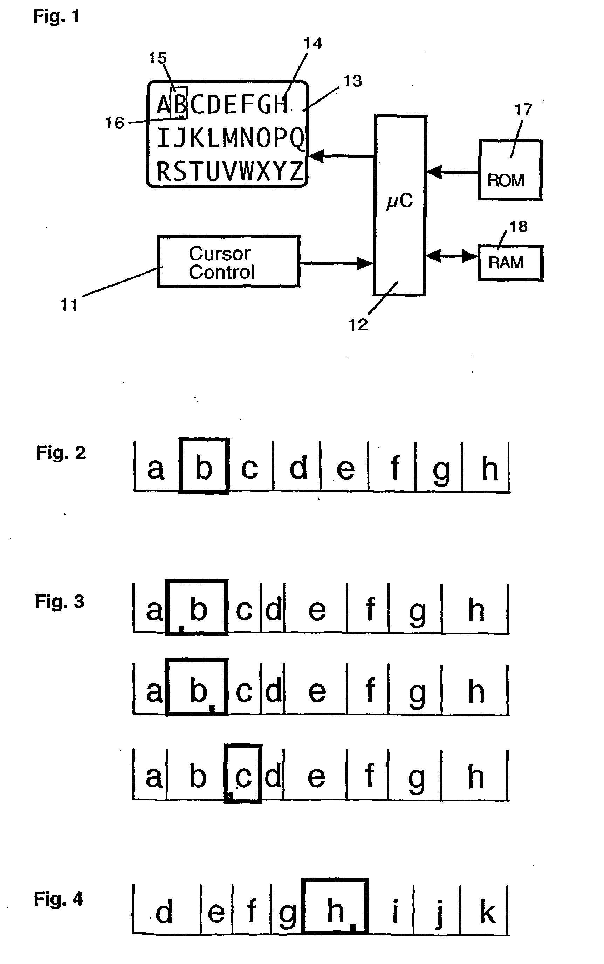

In Fig. 1 ist ein Blockschaltbild der erfindungsgemäßen Einrichtung zu sehen. Eine Cursorsteuerungs-Einheit 11 ist über eine Steuerung beispielsweise in der Form eines Mikrocontrollers 12 mit einem Display 13 verbunden, auf dem ein Buchstabenvorrat 14 ganz oder teilweise dargestellt ist. Dieser Buchstabenvorrat 14 umfaßt sämtliche Eingabezeichen, die in dieser Situation eingegeben werden können. Über die Cursorsteuerung 11 läßt sich ein Cursor 15 auf dem Buchstabenvorrat 14 bewegen. Dabei kann optional ein Indikator 16 in der Form eines kleinen Symbols oder Mauszeigers innerhalb der Fläche des Cursors 15 eine genaue Rückkopplung zur Betätigung der Cursorsteuerung 11 liefern.

Der Cursor 15 erscheint auf dem Buchstabenvorrat in Abhängigkeit von der Eingabesequenz in unterschiedlicher Größe. Dazu speichert der Mikrocontroller 12 in einem Schreib-/Lesespeicher 18 die zuletzt eingegebenen Buchstaben. Dieses, im Schreib-/Lesespeicher 18 gespeicherte, in der Regel unvollständige Wort, wird von dem Mikrocontroller 12 mit einem Katalog der Häufigkeiten möglicher Eingabesequenzen aus dem Lesespeicher 17 verglichen.

Aus diesem Vergleich ermittelt die Mikrocontroller 12 eine Voraussage, welche nachfolgenden Buchstaben häufiger erwartet werden und welche weniger häufig. Je nach dieser Wahrscheinlichkeit werden die Umrisse der Buchstaben des Zeichenvorrats 14 mit variabler Größe hervorgehoben, wenn sie mit dem Cursor 15 ausgewählt werden.

Die Cursorsteuerungs-Einheit 11 kann im einfachsten Fall aus zwei Pfeiltasten bestehen, aber auch aus einem Joystick, Drehimpulsgeber (JogDial), einem Sensorstreifen (z.B. Linearpotenziometer), einem Touchscreen, einer Maus o.ä.. Das Display 13 muß einen Ausschnitt aus dem Buchstabenvorrat 14 darstellen können, der mindestens ein einzelnes Zeichen mit dem Cursor 15 und maximal den gesamten Vorrat umfaßt.

Der Speicherbaustein 18 kommt mit einer Kapazität von rund zwanzig Zeichen (20 Byte) aus und braucht den Zustand im abgeschalteten Zustand nicht zu erhalten (flüchtiger Speicher). Der Lesespeicher 17 muß zur Abbildung der Buchstabensequenz-Häufigkeiten über eine Kapazität von mindestens einigen tausend Zeichen verfügen (20 bis 1000 KiloByte) und nicht flüchtig sein (Typ ROM oder EPROM, Festwertspeicher oder Firmware).

Fig. 2, 3 und 4 zeigen Beispiele von Bildschirmdarstellungen zur Illustration der Benutzeroberfläche. In Fig. 2 ist eine Buchstabenliste mit einem Ausschnitt aus dem Buchstabenvorrat zu sehen, bei dem sämtliche Buchstaben in gleicher Breite abgebildet sind. Das entspricht einer Cursorsteuerung zur Buchstabenauswahl nach dem Stand der Technik.

Der Cursor kann hier jeden sichtbaren Buchstaben prinzipiell in der gleichen Zeit erreichen, wobei je nach Art der Cursorsteuerung eine längere Strecke eine längere Zeit benötigen kann (d.h. in Fig. 2 kann von der Position "b" das "c" schneller zu erreichen sein als etwa das "g", aber der Unterschied der Bewegung von "b" zu "g" im Vergleich zu von "b" zu "h" ist minimal).

In Fig. 3 ist die Auswirkung der Erfindung deutlich sichtbar. Die Buchstaben werden mit unterschiedlicher Breite dargestellt, so daß der Cursor in diesem Beispiel schneller über die schmal dargestellten Buchstaben "c" oder "d" hinweggeht als über die Buchstaben "b" oder "g". Die drei Zeilen von Fig. 3 stellen drei Folgezustände dar. Der Cursor wird nach rechts bewegt, wobei sich hier der von Fig. 1, Nr. 16 bekannte Indikator mit gleichmäßiger Geschwindigkeit nach rechts bewegt. In dem Moment, wo der Indikator an den Rand des Cursor-Umrisses stößt, springt der Cursor einen Buchstaben weiter. Durch dieses Verhalten ist der Cursor einfacher auf die breiter dargestellten Buchstaben zu positionieren und schwieriger auf die schmaler dargestellten.

Fig. 3 illustriert eine Situation, in der die Buchstaben "b", "e", "g" und "h" als wahrscheinliche Folgebuchstaben ermittelt wurden, während die Buchstaben "a", "c" und "d" als eher unwahrscheinlich eingestuft wurden. Durch die unterschiedliche Größe lassen sich die erwarteten Buchstaben aus dem Vorrat schneller und leichter treffen als die weniger erwarteten. Da in natürlichsprachlichen Texten die Abfolge von Buchstaben nicht zufällig ist, werden in den meisten Fällen die größer dargestellten Buchstaben ausgewählt. Das beschleunigt die Auswahl und verringert das Risiko von Eingabefehlern.

Nach dem "Gesetz von Fitts" (Fitts Law) lassen sich Ziele mit einer Cursorsteuerung um so schneller treffen, je größer sie sind. Eine realistische Annahme ist, daß die Erfindung die gewünschten Buchstaben im Durchschnitt 30 bis 60% größer darstellt, als sie ohne die Erfindung dargestellt würden. Daraus läßt sich grob eine Erhöhung der Eingabegeschwindigkeit durch die Erfindung um 30 bis 60% abschätzen.

In Fig. 4 ist eine weitere Situation der gleichen Benutzeroberfläche dargestellt. Nach jeder Buchstabeneingabe werden die Wahrscheinlichkeiten für die jeweiligen Folgebuchstaben mit Hilfe der Tabelle aus Fig. 1 Nr. 17 neu berechnet, wodurch auch die Anzeige des Buchstabenvorrats mit den entsprechenden Buchstabengrößen entsprechend angepaßt werden kann.

In den Darstellungen von Fig. 3 und 4 werden die Buchstabenbreiten nach jeder Eingabe variiert. Statt dessen wäre es auch möglich, wie in Fig. 1 alle Buchstaben des Vorrats gleich groß zu zeigen und nur die Cursorgröße zu variieren; oder aber nur die Höhe oder sowohl Höhe und Breite jedes Buchstabens zu verändern.

Was davon zweckmäßig ist, hängt von dem Typ der Cursorsteuerung und des Displays ab: Bei einer zweidimensionalen Cursorsteuerung (z.B. Joystick, Maus) ist eine zweidimensionale Anpassung, also von Breite und Höhe, sinnvoll. Läßt sich der Cursor nur horizontal oder nur vertikal bewegen, ist eine Anpassung nur dieser Achse sinnvoll.

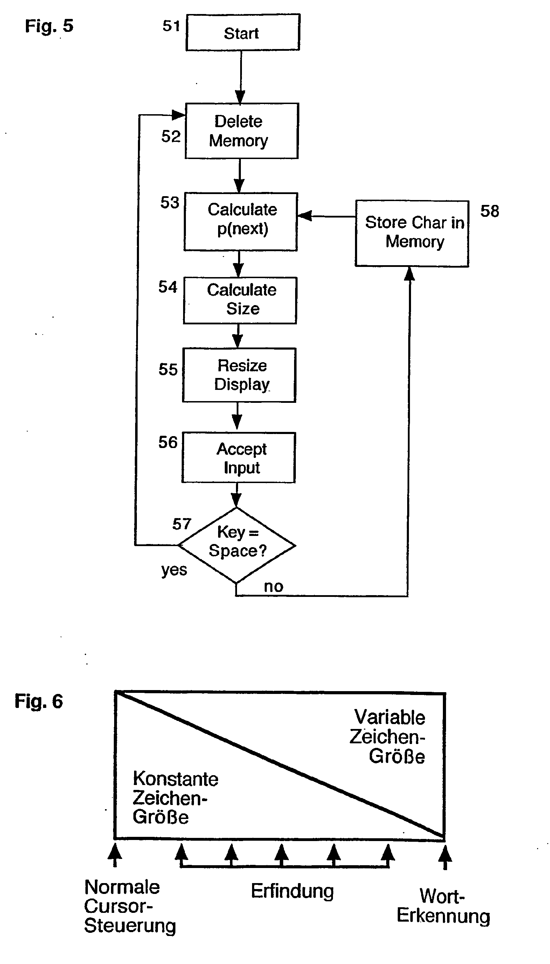

Fig. 5 zeigt die Ablaufschritte während der Eingabe. Nach dem Start 51 wird in Schritt 52 zunächst der Speicher der aktuellen Eingabesequenz (Nr. 18 in Fig. 1) geleert. Dann berechnet der Mikroprozessor 12 aus dem Katalog der Eingabesequenz-Häufigkeiten (Nr. 17 in Fig. 1) in Schritt 53 die Wahrscheinlichkeit des Auftretens für jeden Buchstaben des Buchstabenvorrats (Nr. 14 in Fig. 1) angesichts der bekannten Eingabesequenz. Anhand dieser Wahrscheinlichkeiten werden in Schritt 54 die relativen Größen für die angezeigten Buchstaben berechnet und in Schritt 55 zur Anzeige gebracht. Schritt 56 verarbeitet die Cursorbewegungen bis zur Auswahl des nächsten Buchstabens durch einen Tastendruck, Mausklick o.ä. je nach Typ der Cursorsteuerung. Ist das nächste Zeichen eine Leertaste oder ein Wortzwischenraum, wird der Puffer für die Eingabesequenz gelöscht (Schritt 57, dann 52). Wird statt dessen das Wort fortgesetzt (Schritt 57, dann 58), dann wird dieser neue Buchstabe ebenfalls in dem Puffer gespeichert, damit er bei der nächsten Berechnung der Wahrscheinlichkeiten in Schritt 53 berücksichtigt werden kann.

In Fig. 6 wird die Erfindung den bekannten Texteingabe-Cursorsteuerungen und dem Verfahren der Worterkennnung gegenüber gestellt. Bei den üblichen Cursorsteuerungen zur Text-eingabe werden alle Buchstaben mit einem gleich großen Cursor ausgewählt, wie in Fig. 2 sichtbar und in Fig. 6 durch den linken Rand des Diagramms angedeutet. Das Verfahren der Worterkennung dagegen bietet immer nur eine Auswahl zulässiger Buchstaben, die sozusagen entweder mit 0% oder 100% angezeigt werden, was durch den rechten Rand des Diagramms von Fig. 6 illustriert wird.

Der Effekt der Erfindung hingegen kann, wie in der Mitte von Fig. 6 angedeutet, beliebig skaliert werden. Je nach dem, wie stark der Einfluß der Buchstaben-Wahrscheinlichkeiten auf die Darstellung gewählt wird, variiert die Buchstabenbreite in der Anzeige schwächer (links im Diagramm) oder stärker (rechts im Diagramm).

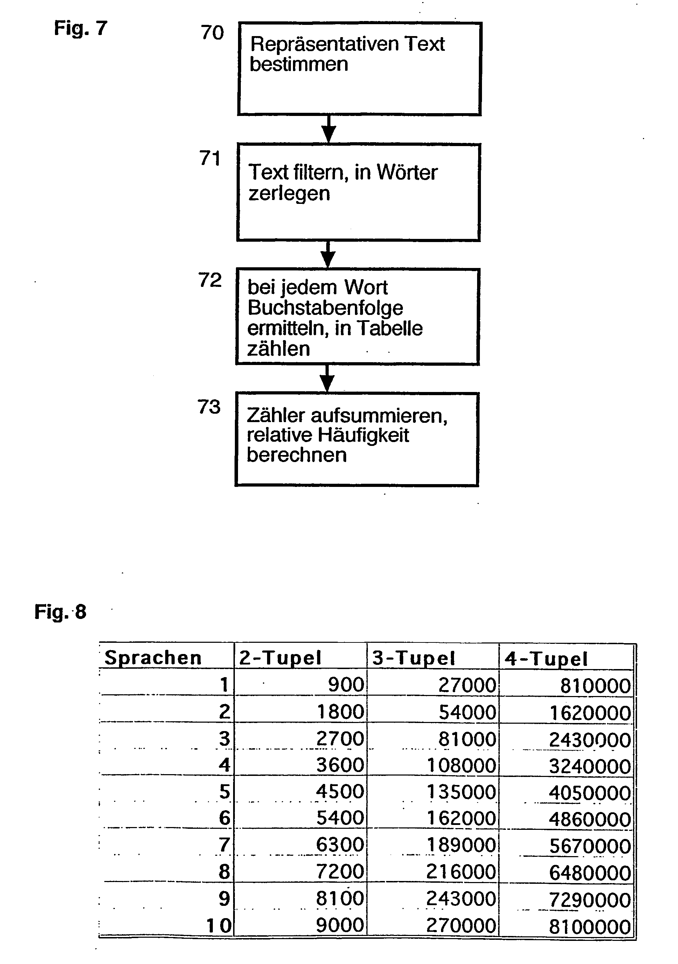

Fig. 7 führt die Schritte auf, die notwendig sind, um die Tabelle mit den Wahrscheinlichkeiten der Buchstaben-Abfolgen zu generieren. Das wird durch das erfindungsgemäß ausgebildete Verfahren vollautomatisch vorgenommen, sofern ein längerer, repräsentativer Text vorliegt, der ähnliche Eingabesequenzen enthält wie der beabsichtigte Inhalt (Schritt 70). Ein typischer Text von einigen zigtausend Zeichen reicht aus. Am einfachsten ist es, von Benutzern tatsächlich eingegebene Texte zu erfassen. Wenn Texte in verschiedenen Sprachen eingegeben werden sollen, sollte für jede Sprache eine eigene Tabelle generiert werden.

Dieser repräsentative Text muß für die Analyse zunächst gefiltert werden, indem Großbuchstaben in Kleinbuchstaben umgewandelt werden und alle für die einzelnen Wörter unwichtigen Sonderzeichen entfernt werden (Schritt 71). Durch die Berücksichtigung der Wortzwischenräume als Trennzeichen wird aus dem Text eine Liste von Wörtern.

Aus dieser Wortliste werden in Schritt 72 für jedes Wort die Buchstabenfolgen ermittelt und jedes Vorkommen einer Abfolge gezählt. Je nach verfügbarem Speicherplatz können kürzere oder längere Buchstabenfolgen berücksichtigt werden, wobei in der Praxis mindestens zwei und höchstens etwa sechsfache Abfolgen berücksichtigt werden sollten. Längere Buchstabenfolgen ergeben eine etwas genauere Statistik und dadurch optimierte Buchstaben-Cursorgrößen.

Werden beispielsweise die im Wort "rokoko" enthaltenen Buchstabenfolgen auf diese Weise gezählt, dann würde bei der Zählung von Zweierfolgen jeweils "_r", "ro", "ok", "ko", "ok", "ko" gezählt, also 1x "_r", 1x "ro" und jeweils 2x "ok" und "ko"; wobei das Zeichen "_" für eine Wortgrenze steht. Bei einer Zählung von Dreierfolgen würden "_ro", "rok", "oko", "kok", "oko" gezählt, also 1x "_ro", "rok", "kok" und 2x "oko".

Schließlich werden in Schritt 73 von Fig. 7 aus den Zählern der Statistik Annahmen für die relative Wahrscheinlichkeit berechnet, indem die Zählung der einzelnen Vorkommen ins Verhältnis zur Gesamtzählung gesetzt werden. Folgt beispielsweise auf den Buchstaben "g" im repräsentativen Text etwa dreimal ein "r", einmal ein "u" und sonst nichts, dann erscheint die Wahrscheinlichkeit eines "r" nach einem "g" als 3/4 und die eines "u" als 1/4.

In Fig. 8 ist der Speicherbedarf für die Häufigkeitstabellen (Nr. 17 in Fig. 1) in Abhängigkeit von der berücksichtigten Länge der Abfolgen aufgeführt. Dabei wird von einem Zeichenvorrat von 30 Buchstaben ausgegangen. Unter diesen Bedingungen benötigt eine Tabelle mit Zweier-Abfolgen 30x30 Zeichen, also 900 Byte, eine Tabelle mit Dreierabfolgen entsprechend 30x30x30 Zeichen, also 27000 Byte. Wenn Tabellen für mehrere Sprachen gespeichert werden sollen, vervielfacht sich der Bedarf entsprechend. Aus Fig. 8 geht hervor, daß der Speicherbedarf für die Tabellen in einer Größenordnung liegt, die von üblichen elektronischen Geräten problemlos bereitgestellt werden kann.

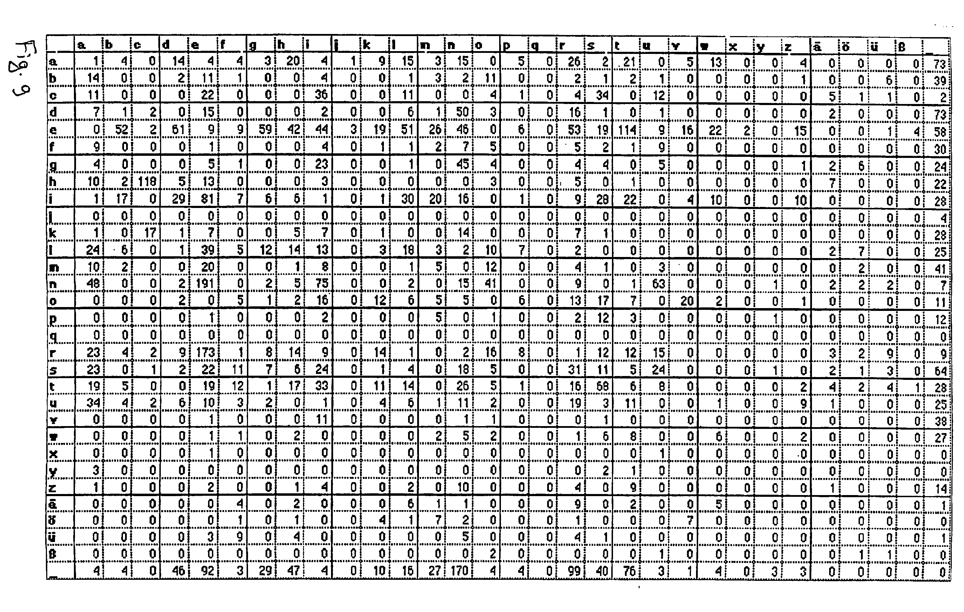

Fig. 9 zeigt eine Tabelle mit einer Zählung von Zweierfolgen, die aus einem rund 5000 Zeichen langen deutschen Beispieltext generiert wurde. In der obersten Zeile ist der jeweils erste Buchstabe und in der Spalte ganz links der Folgebuchstabe abzulesen. Aus dieser Zählung ist z.B. zu erkennen, daß in dem Mustertext die Zeichenfolge "ab" 14x und die Zeichenfolge "ba" 4x aufgetreten ist.

Weiterhin ist in Fig. 9 zu erkennen, daß in dem Mustertext auf ein "d" niemals ein "c" oder "g" folgte, aber 61x ein "e". Wenn sich diese Tendenz des Mustertexts bei einem längerem repräsentativen Text bestätigt, würde die Wahrscheinlichkeit der Abfolge "de" als hoch eingeschätzt und die der Abfolgen "dc" und "dg" als niedrig. Somit würde nach der Eingabe eines "d" der Buchstabenvorrat solchermaßen angezeigt, daß ein "e" leicht erreichbar und "c" und "g" schwieriger erreichbar sind. Das bedeutet, ein "e" hätte dann für den Cursor eine größere Fläche und "c" sowie "g" nur die Mindestgröße.

Wie stark Maximal- und Mindestgröße sich unterscheiden, wird in dem Parameter entsprechend Fig. 6 festgelegt. Dabei kann es sich um eine benutzergewählte Voreinstellung handeln, die sich etwa auf die Stufen 0%, 30%, 60% und 90% (für 90% Unterschied zwischen größtem und kleinstem Buchstaben) einstellen lassen könnte. Die Gesamtgröße des angezeigten Buchstabenvorrats bleibt dabei immer gleich, nur die Verteilung ändert sich.

Im Vergleich zu üblichen Cursorsteuerungen zur Textauswahl bietet die Erfindung eine erheblich schnellere Eingabe-Geschwindigkeit. Zur Bedienung ist keinerlei Erklärung notwendig; wenn der Effekt schwach eingestellt ist, bleibt er sogar womöglich unbemerkt und beschleunigt trotzdem die Eingabe.

Im Gegensatz zum Verfahren der Worterkennung schränkt die Erfindung die möglichen Eingabesequenzen in keiner Weise ein, da die Eingabe unüblicher Buchstabenfolgen nur durch eine kleinere Darstellung gebremst wird. Außerdem läßt sich die Erfindung auf einfache Weise automatisch an verschiedene Sprachen anpassen, sofern nur ein repräsentativer Text vorliegt. Die generierten Häufigkeitstabellen benötigen nur minimalen Speicherplatz und können genauer oder kompakter gewählt werden.

Das System läßt sich an beliebige Display-Größen anpassen, ob diese nun den gesamten Zeichenvorrat darstellen oder nur einen Ausschnitt davon. Ebenso ist eine Anpassung an beliebige Cursorsteuerungen möglich, ob auf der Basis von Pfeiltasten in zwei oder vier Richtungen, Joysticks, Mäuse, Streifensensoren und ähnliches.

Das Verfahren ist vorteilhaft bei kompakten elektronischen Geräten, die aus Platzgründen nicht mit einer normalen Schreibmaschinen-Tastatur ausgestattet werden können und daher nur über eine behelfsmäßige Texteingabe durch Cursortasten oder ähnliche Eingabemedien verfügen.

### Bezugszeichenaufstellung

- 11: Cursorsteuerungseinheit
- 12: Mikrokontroller
- 13: Display
- 14: Buchstabenvorrat
- 15: Cursor
- 16: Indikator
- 17: Lesespeicher
- 18: Schreib-/Lesespeicher

## Patentansprüche

1. Verfahren zur Texteingabe durch die Steuerung eines einen Buchstaben aus einem angezeigten Buchstabenvorrat (14) hervorhebenden Cursors (15), ***dadurch gekennzeichnet,* dass** der Cursor in horizontaler und/oder vertikaler Richtung mittels einer Cursor-Steuerungseinheit (11) schrittweise auf jeden beliebigen Buchstaben des Buchstabenvorrats (14) bewegt werden kann, wobei die Größe des dargestellten Cursors (15) in Verhältnis zu der berechneten Wahrscheinlichkeit des Auftretens des jeweiligen Buchstabens im Kontext der unmittelbar zuvor eingegebenen Buchstaben steht.

2. Verfahren zur Texteingabe nach Anspruch 1, ***dadurch gekennzeichnet,* dass** einmal aus einem repräsentativen Beispieltext die Häufigkeit des Auftretens aller möglichen Buchstabenfolgen ermittelt wird und bei jeder Eingabe aus dieser Häufigkeit zusammen mit den vorher eingegebenen Buchstaben der Eingabefolge eine Wahrscheinlichkeit für den Folgebuchstaben berechnet wird.

3. Verfahren zur Texteingabe nach Anspruch 1 und 2, ***dadurch gekennzeichnet,* dass** am unteren Ende eines rechteckigen Cursors (15) ein punktförmiger Indikator (16) angezeigt wird, der bei Betätigung mit gleichmäßiger Geschwin-digkeit horizontal und/oder vertikal über verschieden groß dargestellte Buchstaben eines Buchstabenvorrats (14) bewegt wird, wobei die Richtung der Bewegung des Indikators von der Betätigung einer verbundenen Cursor-steuerungs-Apparatur (11) durch eine Bedienperson abhängt.

4. Verfahren nach Anspruch 1 bis 3, ***dadurch gekennzeichnet,* dass** der Unterschied zwischen der größten und kleinsten Darstellung des Cursors (15) in mehreren Stufen von Benutzern gewählt werden kann, wobei wahlweise eine einheitliche Größe des Cursors (15) auf allen Buchstaben des Buchstabenvorrats (14) oder stufenweise eine größere Verschiedenheit eingestellt werden kann.

5. Verfahren nach Anspruch 1 bis 4, ***dadurch gekennzeichnet,* dass** die Wahrscheinlichkeit des Auftretens eines Buchstabens auf der Basis der vorhergehenden Buchstabensequenz, die in einem Eingabepuffer gespeichert wird, sowie auf der Basis einer aus einem nichtflüchtigen Speicher gelesenen Häufigkeits-Tabelle von einem Mikro-controller berechnet wird.

6. Einrichtung zur Durchführung des Verfahrens zur Texteingabe nach Anspruch 1 bis 5, ***dadurch gekennzeichnet,* daß** eine Cursorsteuerungseinheit (11) über eine Software-Schnittstelle mit einem, die von der Cursorsteuerungs-einheit (11) bereitgestellten Daten interpretierenden Mikrocontroller (12) verbunden ist, wobei der Mikrocontroller (12) mit einem der Abfrage dienenden Lesespeicher (17) und mit einem die Eingabezeichen puffernden Schreib-/Lesespeicher (18) verbunden ist und ein die von den Mikrocontroller (12) gelieferten Daten anzeigendes Display (13) vorgesehen ist.

## Claims

1. A method for inputting text by controlling a cursor (15) that highlights one letter of a displayed letter inventory (14), **characterized in that** the cursor can be incrementally moved to any desired letter of the letter inventory (14) in the horizontal and/or vertical direction by means of a cursor control unit (11), wherein the size of the cursor (15) being displayed is related to the calculated probability of the occurrence of the respective letter in the context of the letters that were input directly prior thereto.

2. The method for inputting text according to Claim 1, **characterized in that** the frequency of the occurrence of all possible letter sequences is determined once based on a representative sample text, and **in that** a probability for the ensuing letter is calculated during each input based on this frequency in conjunction with the letters of the input sequence that were input prior thereto.

3. The method for inputting text according to Claims 1 and 2, **characterized in that** a punctiform indicator (16) is displayed on the lower end of a rectangular cursor (15) and, when actuated with a uniform speed, horizontally and/or vertically moved over letters of a letter inventory (14) that are displayed in different sizes, wherein the direction of the indicator movement depends on the actuation of a connected cursor control unit (11) by an operator.

4. The method according to Claims 1 to 3, **characterized in that** the difference between the largest and the smallest display of the cursor (15) can be selected by users in several increments, wherein a uniform size of the cursor (15) can be adjusted on all letters of the letter inventory (14) or a greater dissimilarity can be adjusted incrementally.

5. The method according to Claims 1 to 4, **characterized in that** the probability of the occurrence of a letter is calculated by a microcontroller on the basis of the preceding letter sequence that is stored in an input buffer, as well as on the basis of a frequency table that is read out of a non-volatile memory.

6. A device for carrying out the method for inputting text according to Claims 1 to 5, **characterized in that** a cursor control unit (11) is connected to a microcontroller (12) for interpreting data made available by the cursor control unit (11) via a software interface, wherein the microcontroller (12) is connected to a read-only memory (17) that serves for inquiry purposes and to a read-write memory (18) that buffers the input characters, and wherein a display (13) is provided for displaying the data delivered by the microcontroller (12).

## Revendications

1. Procédé pour la saisie de texte par la commande d'un curseur (15) mettant en avant un caractère à partir d'une réserve de caractères (14), **caractérisé en ce que** le curseur peut être déplacé graduellement dans le sens horizontal et/ou vertical, sur n'importe quel caractère au choix parmi la réserve de caractères (14), au moyen d'une unité de commande de curseur (11), la taille du curseur représenté (15) étant définie par rapport à la probabilité d'apparition calculée pour chaque caractère en fonction des caractères venant d'être saisis immédiatement auparavant.

2. Procédé pour la saisie de texte selon la revendication 1, **caractérisé en ce que** la fréquence d'apparition de toutes les suites de caractères possibles est communiquée une fois à partir d'un exemple de texte représentatif, et **en ce qu'**une probabilité est calculée à chaque saisie pour le caractère suivant, à partir de cette fréquence, ensemble avec les caractères saisis précédemment dans l'ordre de saisie.

3. Procédé pour la saisie de texte selon les revendications 1 et 2, **caractérisé en ce qu'**un indicateur (16) est affiché sous la forme d'un point sur l'extrémité inférieure d'un curseur rectangulaire (15), indicateur qui est déplacé à vitesse constante lors de l'activation, de façon horizontale ou verticale, sur des caractères représentés en différentes tailles parmi une réserve de caractères (14), le sens de déplacement de l'indicateur dépendant de l'activation d'un système de commande de curseur (11) par un opérateur.

4. Procédé selon l'une des revendications 1 à 3, **caractérisé en ce que** la différence entre la plus grande et la plus petite représentation du curseur (15) peut être sélectionnée parmi plusieurs niveaux par les utilisateurs, une taille de curseur (15) uniforme au choix pour tous les caractères parmi la réserve de caractères (14) ou bien une plus grande différence graduelle pouvant être réglées au choix.

5. Procédé selon l'une des revendications 1 à 4, **caractérisé en ce que** la probabilité de l'apparition d'un caractère sur la base de la séquence des caractères précédents, qui est enregistrée dans une mémoire tampon de saisie, ainsi que sur la base d'un tableau de fréquence lu à partir d'une mémoire non volatile, est calculée par un microcontrôleur.

6. Dispositif destiné à la mise en oeuvre du procédé pour la saisie de texte selon l'une des revendications 1 à 5, **caractérisé en ce que** l'unité de commande du curseur (11) est reliée par le biais d'une interface logicielle à un microcontrôleur (12) interprétant les données fournies par l'unité de commande de curseur (11), le microcontrôleur (12) étant relié à une mémoire de lecture (17) servant à la requête, ainsi qu'à une mémoire vive (18) mettant en mémoire tampon les symboles saisis, et **en ce qu'**un écran d'affichage (13) est prévu pour afficher les données fournies par le microcontrôleur (12).
